# EUROPÄISCHE PATENTSCHRIFT

(11) **EP 0 657 131 B1**
(45) Veröffentlichungstag und Bekanntmachung des Hinweises auf die Patenterteilung: **18.12.1996**
(21) Anmeldenummer: 94111837.4
(22) Anmeldetag: 29.07.1994
(51) Int. Cl.: A47J 36/04, A47J 39/02, A47J 27/00

(54) **Gastronorm-Schale für Büfetts**
Catering dish for buffets
Assiette de restauration pour des buffets

(30) Priorität: 07.12.1993 DE 9318660 U
(43) Veröffentlichungstag der Anmeldung: 14.06.1995
(73) Patentinhaber: Erste Bayreuther Porzellanfabrik Walküre Siegm. Paul Meyer GmbH, D-95445 Bayreuth (DE)
(72) Erfinder: Meyer, Rudolf, D-95445 Bayreuth (DE)
(74) Vertreter: Böhme, Volker, Dipl.-Ing.

(56) Entgegenhaltungen:
- BE-A- 367 850
- CH-A- 106 171
- DE-C- 633 014
- FR-A- 2 541 570
- GB-A- 1 000 965
- US-A- 4 210 124
- US-A- 5 004 121
- Deutsche DIN-NORM 66075

## Beschreibung

Die Erfindung betrifft eine Gastronorm-Schale für Büfetts, die im wesentlichen rechteckig ist, mit anderen ineinander stapelbar ist und aus einem einheitlichen Schalenmaterial besteht, bei der von einem Boden zwei Querwände und zwei Längswände aufragen, die an Eckbereichen ineinander übergehen und einen nach außen wegragenden umlaufenden Griffsims tragen, der in den Eckbereichen ausgeprägte Ecken bildet, und bei der die Querwände und die Längswände behältniserweiternd nach außen gestaltet sind und einen nach außen gerichteten umlaufenden Vorsprung bilden, gemäß dem Oberbegriff des Patentanspruchs 1.

Bei einer bekannten (DIN 66 075) Gastronorm-Schale dieser Art ist das einheitliche Schalenmaterial Kunststoff und sind die Querwände sowie die Längswände über die gesamte Wandungshöhe gleichmäßig leicht geneigt gestaltet. Die Gastronorm-Schale aus Kunststoff hält darin enthaltene Speisen nur über eine relativ kurze Zeit warm, weil die Wärmespeicherfähigkeit von Kunststoff relativ gering ist. Es ist auch ein Speisengefäß bekannt (BE-A-367 850), bei dem das einheitliche Gefäßmaterial Porzellan ist und die Querwände sowie die Längswände einen nach außen gerichteten umlaufenden Vorsprung bilden, wobei zwischen dem aufnehmenden Bereich des unteren Gefäßes und dem eingesteckten Bereich des oberen Gefäßes ein Spiel vorhanden ist. Jedoch ist der umlaufende Vorsprung im oberen Viertel der Wandungshöhe, oben an einem vertikal gestalteten Bereich der Wandung vorgesehen, der sich nicht in ein gleiches unteres Speisengefäß einstecken läßt.

Eine Aufgabe der Erfindung ist es daher, eine Gastronorm-Schale der eingangs genannten Art zu schaffen, die eine vergrößerte Wärmespeicherfähigkeit aufweist. Die erfindungsgemäße Schale ist, diese Aufgabe lösend, dadurch gekennzeichnet, daß das Schalenmaterial Porzellan ist und die weiteren kennzeichnenden Merkmale des Patentanspruchs 1 vorgesehen sind.

Eine Schale aus Porzellan weist materialbedingt eine größere Wanddicke als eine Schale aus Edelstahl auf. Die Wärmespeicherfähigkeit von Porzellan ist weit besser als die von Edelstahl. Somit lassen sich Speisen in der erfindungsgemäßen Gastronorm-Schale länger warmhalten als in einer aus Edelstahl. Porzellan hält ebenso wie Edelstahl direkte Hitzeeinwirkung durch Elektroplatten oder Kerzenflammen aus. Porzellan hat eine glatte glasierte Oberfläche, die sich gut reinigen läßt.

Die erfindungsgemäßen Gastronorm-Schalen werden beim Stapeln weniger tief ineinander gesteckt. Hierdurch ist berücksichtigt, daß ineinander gestapelte Schalen aus Porzellan leicht klemmen, wenn sie dicht an dicht liegen. Es ist zwischen dem aufnehmenden Bereich der unteren Schale und dem eingesteckten Bereich der oberen Schale ein Spiel vorhanden. Besonders zweckmäßig und vorteilhaft ist es, wenn der umlaufende Vorsprung im, von oben gezählten, dritten Sechstel der Wandungshöhe vorgesehen ist.

Es bilden die Eckbereiche zwischen den Querwänden und den Längswänden den ausgeprägten Ecken des Griffsimses gleichende ausgeprägte Ecken und die Breite des Griffsimses in den Eckbereichen ist etwa gleich der Breite in den geraden Bereichen. Das Porzellanmaterial läßt es nicht zu, den Griffsims in den Eckbereichen allzu ausladend zu gestalten. Es ist also materialbedingt, wenn ausgeprägte Behältnisecken vorgesehen sind und die Griffsimsbreite bei den Ecken reduziert ist.

Der Übergang zum Porzellan macht die den umlaufenden Wand-Vorsprung betreffende Gestaltung und die die Eckbereiche betreffende Gestaltung zweckmäßig. Es sind beide Gestaltungen gemeinsam vorgesehen, um die Gastronorm-Schale vereinfacht herstellen zu können und vereinfacht ineinander stapeln zu können.

Besonders zweckmäßig und vorteilhaft ist es weiterhin, wenn der umlaufende Vorsprung als Stufe ausgebildet ist. Auch diese zwischen ausgeprägten Kanten befindliche, in etwa waagerechte Stufe dient dem klemmfreien Aufeinanderstehen ineinander gestapelter Schalen. Im Zusammenhang mit dem Ineinanderstapeln ist die vergrößerte Wanddicke einer Schale aus Porzellan zu beachten.

Besonders zweckmäßig und vorteilhaft ist es sodann, wenn die Querwände und die Längswände unterhalb des umlaufenden Vorsprungs leicht geneigt gestaltet sind und wenn die Querwände und die Längswände oberhalb des umlaufenden Vorsprungs im wesentlichen vertikal gestaltet sind. Die Behältniserweiterung erfolgt also primär durch den umlaufenden Vorsprung und die zwei ineinander gestapelten Schalen stützen sich nicht mit schrägen Wandbereichen aneinander ab.

Besonders zweckmäßig und vorteilhaft ist es noch, wenn die Längswände und die Querwände unten im Bereich des Bodens über eine gebogene Einbeziehung umlaufend einen Fußsockel bilden. Dieser Fußsockel ergibt einen scharfen Übergang zur Unterseite des Bodens und läßt eine scharfe Abgrenzung der glasierten Oberfläche der Wandaußenfläche gegenüber der unglasierten Oberfläche der Unterseite des Bodens zu.

Besonders zweckmäßig und vorteilhaft ist es, wenn die Dicke des Griffsimses geringer ist als die Dicke der Querwände bzw. der Längswände. Der Griffsims ist nur so dick, daß er seine Haltefunktion erfüllen kann und braucht zur Wärmespeicherung nichts beizutragen. Das Porzellanmaterial läßt es zu, die Wände und den Boden dicker zu gestalten als den Griffsims.

In der Zeichnung ist eine bevorzugte Ausführungsform der Erfindung dargestellt und zeigt
- Fig.1: eine Draufsicht auf eine Hälfte einer Gastronorm-Schale für Büfetts,
- Fig.2: eine Unteransicht einer Hälfte der Gastronorm-Schale gemäß Fig. 1 und
- Fig.3: einen Schnitt gemäß Linie III-II in Fig. 1.

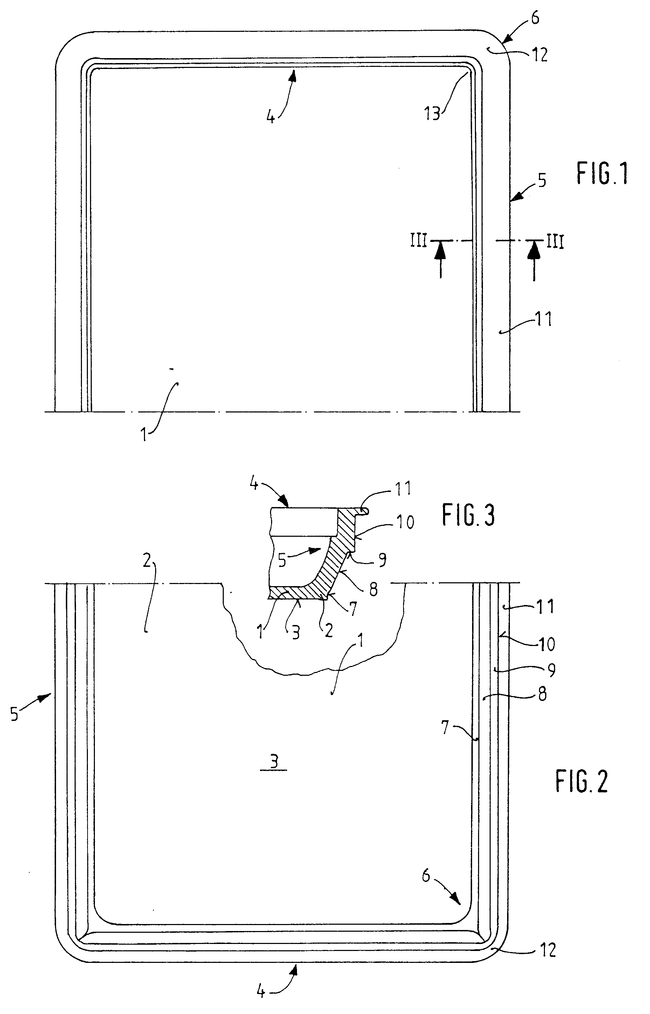

Die Gastronorm-Schale gemäß Zeichnung besteht aus Porzellan und besitzt einen im wesentlichen flachen, rechteckigen Boden 1, der nach unten und außen einen Fußsockel 2 bildet, dessen Unterseite 3 nicht glasiert ist, wogegen die sonstige Oberfläche der Schale glasiert ist. Von dem Boden 1 streben zwei Querwände 4 und zwei Längswände 5 nach oben, die bei Eckbereichen 6 rechtwinkelig aufeinander stoßen. Die Querwände 4 und die Längswände 5 bilden anschließend an den Fußsockel 2 außen eine Wölbung 7 und daran anschließend eine Schräge 8, die bei einer nach außen gerichteten Stufe 9 endet, die außen in eine nach oben gehende Vertikale 10 übergeht, die bei einem Griffsims 11 endet. Der Griffsims 11 bildet ausgeprägte, gerundete Ecken 12 und die umlaufende Stufe 9 ist, von unten gezählt, im vierten Sechstel der Wandungshöhe vorgesehen, die von der Unterseite 3 des Fußsockels 2 bis zur Oberseite des Griffsims 11 gemessen wird. Gemäß Fig. 3 ist die Dicke des Griffsims 11 beachtlich geringer als die des Bodens 1 und die der Längswand 5. Die Querwände 4 und die Längswände 5 bilden behältnisinnenseitig ausgeprägte, gerundete Ecken 13.

## Patentansprüche

1. Gastronorm-Schale für Büfetts,
die im wesentlichen rechteckig ist, mit anderen ineinander stapelbar ist und aus einem einheitlichen Schalenmaterial besteht,
bei der von einem Boden (1) zwei Querwände (4) und zwei Längswände (5) aufragen, die an ausgeprägte Ecken (13) bildenden Eckbereichen (6) ineinander übergehen und einen nach außen wegragenden umlaufenden Griffsims (11) tragen, der in den Eckbereichen ausgeprägte Ecken (12) bildet,
bei der die Breite des Griffsimses (11) in den Eckbereichen (6) etwa gleich der Breite in den geraden Bereichen ist,
bei der die Querwände (4) und die Längswände (5) behältniserweiternd nach außen gestaltet sind,
bei der die Querwände und die Längswände in einem unteren einzusteckenden Bereich leicht geneigt gestaltet sind und
bei der von zwei ineinander gestapelten Schalen die obere Schale einen eingesteckten Bereich in einem aufnehmenden Bereich der unteren Schale aufweist,
dadurch gekennzeichnet,
daß das einheitliche Schalenmaterial Porzellan ist und die Querwände (4) sowie die Längswände (5) einen nach außen gerichteten umlaufenden Vorsprung (9) bilden, wobei zwischen dem aufnehmenden Bereich der unteren Schale und dem eingesteckten Bereich der oberen Schale ein Spiel vorhanden ist, und
daß der umlaufende Vorsprung (9) im mittleren Drittel der Wandungshöhe oben am leicht geneigt gestalteten einzusteckenden Bereich vorgesehen ist.

2. Gastronorm-Schale nach Anspruch 1, dadurch gekennzeichnet, daß der umlaufende Vorsprung (9) im, von oben gezählten, dritten Sechstel der Wandungshöhe vorgesehen ist.

3. Gastronorm-Schale nach Anspruch 1 oder 2, dadurch gekennzeichnet, daß der umlaufende Vorsprung als Stufe (9) ausgebildet ist.

4. Gastronorm-Schale nach Anspruch 1, 2 oder 3, dadurch gekennzeichnet, daß die Querwände (4) und die Längswände (5) oberhalb des umlaufenden Vorsprungs (9) im wesentlichen vertikal (10) gestaltet sind.

5. Gastronorm-Schale nach einem der vorhergehenden Ansprüche, dadurch gekennzeichnet, daß die Längswände (5) und die Querwände (4) unten im Bereich des Bodens (1) über eine gebogene Einziehung (7) umlaufend einen Fußsockel (2) bilden.

6. Gastronorm-Schale nach einem der vorhergehenden Ansprüche, dadurch gekennzeichnet, daß die Dicke des Griffsimses (11) geringer ist als die Dicke der Querwände (4) bzw. der Längswände (5).

## Claims

1. A catering dish for buffets, being substantially rectangular, being stackable with others one inside the other and comprising a uniform dish material, wherein two transverse walls (4) and two longitudinal walls (5) project from a base (1), merge into one another at corner regions (6) forming defined corners (13) and carry a circumferential gripping rim (11) projecting outwards and forming defined corners (12) in the corner regions, wherein the width of the gripping rim (11) in the corner regions (6) is substantially equal to the width in the straight regions, wherein the transverse walls (4) and the longitudinal walls (5) are outwardly formed so as to widen the container, wherein the transverse walls and the longitudinal walls are slightly inclined in a lower insertion region, and wherein, when two dishes are stacked one inside the other, the upper dish has an inserted region in a receiving region of the lower dish, characterised in that the uniform dish material is porcelain and the transverse walls (4) and the longitudinal walls (5) form an outwardly extending circumferential projection (9), there being a degree of clearance between the receiving region of the lower dish and the inserted region of the upper dish, and in that the circumferential projection (9) is provided in the centre third of the wall height at the top of the slightly inclined insertion region.

2. A catering dish according to claim 1, characterised in that the circumferential projection (9) is provided in the third sixth of the wall height, counted from the top.

3. A catering dish according to claim 1 or 2, characterised in that the circumferential projection is formed as a step (9).

4. A catering dish according to claim 1, 2 or 3, characterised in that the transverse walls (4) and the longitudinal walls (5) are formed substantially vertically (10) above the circumferential projection (9).

5. A catering dish according to any one of the preceding claims, characterised in that the longitudinal walls (5) and the transverse walls (4) form a circumferential base support (2) at the bottom in the region of the base (1) by means of a curved recess (7).

6. A catering dish according to any one of the preceding claims, characterised in that the thickness of the gripping rim (11) is less than the thickness of the transverse walls (4) or the longitudinal walls (5).

## Revendications

1. Assiette de restauration pour buffets,
qui est sensiblement rectangulaire, peut s'empiler l'une dans l'autre et est constituée d'un matériau homogène pour l'assiette, dans le cas de laquelle, depuis un fond (1), se dressent deux parois transversales (4) et deux parois longitudinales (5) qui se transforment l'une dans l'autre en des zones d'angle (6) formant des angles marqués (13) et portent un rebord de saisie périphérique (11) qui est orienté vers l'extérieur et qui forme dans les zones d'angle des angles marqués (12),
dans le cas de laquelle la largeur du rebord de saisie (11) dans les zones d'angle (6) est à peu près égale à la largeur dans les zones rectilignes,
dans le cas de laquelle les parois transversales (4) et les parois longitudinales (5) ont une forme qui élargit le récipient vers l'extérieur,
dans le cas de laquelle les parais transversales et les parois longitudinales ont une forme légèrement inclinée dans une zone inférieure à emboîter et
dans le cas de laquelle, des deux assiettes empilées l'une dans l'autre, l'assiette supérieure présente une zone emboîtée dans une zone réceptrice de l'assiette inférieure,
caractérisée
par le fait que le matériau homogène pour l'assiette est de la porcelaine et que les parois transversales (4) ainsi que les parois longitudinales (5) forment une saillie périphérique (9) orientée vers l'extérieur, un jeu existant entre la zone réceptrice de l'assiette inférieure et la zone emboîtée de l'assiette supérieure et
que la saillie périphérique (9) est prévue au tiers intermédiaire de la hauteur de la paroi, en haut, dans la zone à emboîter, de forme légèrement inclinée.

2. Assiette de restauration selon la revendication 1, caractérisée par le fait que la saillie périphérique (9) est prévue, compté d'en haut, au troisième sixième de la hauteur de la paroi.

3. Assiette de restauration selon la revendication 1 ou 2, caractérisée par le fait que la saillie périphérique a la forme d'une marche (9).

4. Assiette de restauration selon la revendication 1, 2 ou 3, caractérisée par le fait que les parois transversales (4) et les parois longitudinales (5) ont, au-dessus de la saillie périphérique (9), une forme sensiblement verticale (10).

5. Assiette de restauration selon l'une des revendications précédentes, caractérisée par le fait qu'en bas, dans la zone du fond (1), les parois longitudinales (5) et les parois transversales (4) forment un socle (2) le long d'un reculement cintré (7).

6. Assiette de restauration selon l'une des revendications précédentes, caractérisé par le fait que l'épaisseur du rebord de saisie (11) est inférieure à l'épaisseur des parois transversales (4) et des parois longitudinales (5).
